(19) Europäisches Patentamt
European Patent Office
Office européen des brevets

(11) EP 2 500 383 A1

(12) EUROPÄISCHE PATENTANMELDUNG

(43) Veröffentlichungstag:
**19.09.2012 Patentblatt 2012/38**

(21) Anmeldenummer: **11158853.9**

(22) Anmeldetag: **18.03.2011**

(51) Int Cl.:
***C09D 5/08*** *(2006.01)* ***C09D 5/44*** *(2006.01)*
***C09D 7/12*** *(2006.01)* ***B01J 13/02*** *(2006.01)*
***C08F 292/00*** *(2006.01)* ***C09C 1/00*** *(2006.01)*
***C09C 3/10*** *(2006.01)* ***C08F 2/22*** *(2006.01)*
***C08F 2/32*** *(2006.01)* ***C08F 2/44*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder:
- **Henkel AG & Co. KGaA
40589 Düsseldorf (DE)**
- **Max-Planck-Gesellschaft zur Förderung der Wissenschaften e.V.
80539 München (DE)**

(72) Erfinder:
- **Taden, Andreas
40597 Düsseldorf (DE)**
- **Kreiling, Stefan
69214 Eppelheim (DE)**
- **Nabih, Nermeen
40547 Düsseldorf (EG)**
- **Landfester, Katharina
55122 Mainz (DE)**

# (54) Pigmenthaltige Lackdispersion sowie W/O Emulsionen als Präkursor für die Bereitstellung der Lackdispersion

(57) Die vorliegende Erfindung liegt auf dem Gebiet der Herstellung von Wasser basierten Lackdispersionen, in denen anorganische und/oder metallische Pigmente einformuliert sind. Die Einformulierung der Pigmente erfolgt derart, dass die Pigmente vom organischen Bindemittel nahezu vollständig eingeschlossen sind, so dass der dispergierte Pigmentanteil der Wasser basierten Lackdispersion auch in korrosiven Medien über einen längeren Zeitraum weitgehend unverändert bleibt. Die vorliegende Erfindung betrifft eine solche wässrige Dispersion enthaltend das Bindemittel und die anorganischen und/oder metallischen Verbindungen in Partikelform und insbesondere die Verwendung solcher Dispersionen als Tauchlacke. Des Weiteren umfasst die vorliegende Erfindung geeignete W/O Emulsionen zur Herstellung dieser wässrigen Dispersionen als auch die Herstellung dieser W/O Emulsionen mit Hilfe von Präkursor - W/O Emulsionen selbst, wobei die Präkursor - W/O Emulsionen entsprechende Edukte einer Fällungsreraktion getrennt voneinander bevorraten, die beim Vermischen der Präkursor - W/O Emulsionen, unter Ausbildung der anorganischen und/oder metallischen Verbindungen in Partikelform abreagieren.

EP 2 500 383 A1

**Beschreibung**

Die vorliegende Erfindung liegt auf dem Gebiet der Herstellung von Wasser basierten Lackdispersionen, in denen anorganische und/oder metallische Pigmente einformuliert sind. Die Einformulierung der Pigmente erfolgt derart, dass die Pigmente vom organischen Bindemittel nahezu vollständig eingeschlossen sind, so dass der dispergierte Pigmentanteil der Wasser basierten Lackdispersion auch in korrosiven Medien über einen längeren Zeitraum weitgehend unverändert bleibt. Die vorliegende Erfindung betrifft eine solche wässrige Dispersion enthaltend das Bindemittel und die anorganischen und/oder metallischen Verbindungen in Partikelform und insbesondere die Verwendung solcher Dispersionen als Tauchlacke. Des Weiteren umfasst die vorliegende Erfindung geeignete W/O Emulsionen zur Herstellung dieser wässrigen Dispersionen als auch die Herstellung dieser W/O Emulsionen mit Hilfe von Präkursor - W/O Emulsionen selbst, wobei die Präkursor - W/O Emulsionen entsprechende Edukte einer Fällungsreraktion getrennt voneinander bevorraten, die beim Vermischen der Präkursor- W/O Emulsionen, unter Ausbildung der anorganischen und/oder metallischen Verbindungen in Partikelform abreagieren.

Lacke enthalten üblicherweise je nach Verwendungszweck neben dem auf der Werkstoffoberfläche zu vernetzenden organischen Bindemittel typische Zuschlagsstoffe, die als Teil der Lackbeschichtung ihre Wirkung entfalten. Im Zusammenhang der vorliegenden Erfindung stehen anorganische Pigmente als typische Lackzuschlagsstoffe im Vordergrund, die beispielsweise für dekorative Zwecke, zur Unterdrückung der korrosiven Lackenthaftung auf Metalloberflächen oder zur Verbesserung der Schweißbarkeit und Umformbarkeit der lackbeschichteten Werkstoffe und Bauteile eingesetzt werden. Eine grundsätzliche Schwierigkeit besteht darin, diese Pigmente stabil in Lackformulierungen bereitzustellen, wobei eine stabile Einformulierung sowohl die Bewahrung der strukturellen als auch chemischen Integrität der Pigmente umfasst. So ist zu gewährleisten, dass die Pigmente in der Lackformulierung bei den üblichen lagerungs- und anwendungsbedingten Standzeiten weder agglomerieren und ihre Partikelgrößen drastisch verändern noch chemischen Umwandlungsprozessen unterliegen und dadurch ihre technische Wirkung verlieren. So können beispielsweise metallische Pigmente durch oberflächliche Oxidation an elektrischer Leitfähigkeit einbüßen, so dass die gewünschte Schweißbarkeit der ausgehärteten Lackbeschichtung merklich abnimmt. Aber auch die Veränderung der Partikeldimensionen der Pigmente kann zum Verlust beispielsweise der dekorativen Wirkung führen, wenn lamellare Oxidpigmente, die häufig in Effektlacken eingesetzt werden, aufgrund chemisch korrosiver Prozesse in der Lackformulierung ihr typisches Aspektverhältnis verlieren.

Das Problem der Konservierung der Eigenschaften der Lackpigmente stellt sich insbesondere für wasserbasierte organische Lackrezepturen, die aufgrund ihrer naturgemäß niedrigen Anteile an organischen Lösemitteln eine große Bedeutung in der Oberflächenbehandlung erlangt haben. Im wässrigen Medium unterliegen viele der typischerweise eingesetzten Lackpigmente je nach vorherrschendem pH-Wert und in Abhängigkeit zusätzlicher in der wässrigen Phase gelöster Verbindungen einer mehr oder weniger stark ausgeprägten Korrosion. Für wasserbasierte Lackrezepturen, die zum Zwecke der Beschichtung von Metalloberflächen autophoretisch eingestellt sind, ist die Einformulierung von lacktypischen Pigmenten besonders kritisch, da für die Einstellung der selbstabscheidenden Zusammensetzungen enthaltend das Lacksystem üblicherweise Mineralsäuren, Oxidationsmittel und Komplexbildner wie Fluoride eingesetzt werden, die wiederum die im Lacksystem einformulierten Pigmentbestandteile massiv korrodieren können. Die Einformulierung von Korrosionsschutzpigmenten wie Zinkphosphat oder von Weißpigmenten wie Silika oder Titandioxid in autophoretische Tauchbäder gelingt daher nicht ohne signifikanten Wirkungsverlust der eingesetzten Pigmente, da der für die autophoretische Beschichtung verfügbare Pigmentanteil erheblich reduziert wird.

Im Stand der Technik werden die in die Lackformulierung einzubringenden Pigmente daher zunächst mit dem organischen Bindemittel intensiv zu einer Pigment-Bindemittel-Paste mechanisch verrieben, bevor diese Paste im wässrigen Medium dispergiert wird. Auf diese Weise soll zumindest teilweise eine Einkapselung der Pigmente durch das Bindemittel erfolgen, um den unmittelbaren Kontakt der Pigmente mit der wässrigen Phase zu vermeiden und so eine erhöhte Stabilität zu gewährleisten.

In der WO 2010/066785 wird das Problem der Pigmentstabilität in einem autophoretischen Lackbad ebenfalls adressiert, wobei dort ebenfalls auf die Herstellung einer Pigment-Bindemittel-Paste als Präkursor für eine auf Metalloberflächen selbstabscheidende wässrige Dispersion abgestellt wird. Die WO 2010/066785 lehrt dabei, dass für eine gute Benetzung der Pigmentpartikel mit dem Bindemittel beim Anreiben der Paste, solche organischen Bindemittel eine hinreichende Einkapselung der Pigmente bewirken, die im Polymerisat eine Anzahl von Säuregruppen aufweisen, wobei die Säurezahl des Bindemittels einen vorgegebenen Wert nicht unterschreiten darf.

Die vorliegenden Erfindung stellt sich die Aufgabe, wässrige Dispersionen, deren dispergierter Feststoffanteil aus organischem Bindemittel und Pigmenten besteht, optimal gegenüber Agglomeration und Sedimentation zu stabilisieren sowie die Stabilität der Pigmente in der wässrigen Dispersion bei pH-Werten, für die eine hohe Löslichkeit der Pigmente in Wasser vorliegt, und in Gegenwart korrosiv wirkender Verbindungen gegenüber dem Stand der Technik weiter zu verbessern. Die Aufgabe der vorliegenden Erfindung erstreckt sich dabei auch auf ein Verfahren zur Herstellung solcher stabilen wässrigen Dispersionen, sowie die Bereitstellung geeigneter Präkursor für die Formulierung der wässrigen Dispersion.

Diese Aufgabe wird gelöst durch die Bereitstellung einer W/O Emulsion als Präkursor für die Formulierung der wässrigen Dispersion, wobei die W/O Emulsion folgende Komponenten enthält:

a) die wässrige Phase enthaltende Tröpfchen, wobei die Tröpfchen einen D90-Wert von nicht mehr als 10 μm aufweisen,
b) eine kontinuierliche, nicht wassermischbare Phase (Ölphase) und
c) mindestens ein Amphiphil (A1) mit einem HLB-Wert von kleiner als 10,

wobei die wässrige Phase anorganische und/oder metallische Verbindungen in Partikelform enthält und die kontinuierliche Phase zumindest teilweise aus mindestens einem Monomer (M) und/oder einer Mischung ($M_n$) von di- oder polyfunktionalen organischen Verbindungen zusammengesetzt ist, wobei die jeweiligen Monomere (M) untereinander Polymerisationsreaktionen und die di- oder polyfunktionalen organischen Verbindungen der Mischung ($M_n$) miteinander Stufenwachstumsreaktionen eingehen können.

Als W/O Emulsion werden allgemein Wasser-in-Öl Emulsionen bezeichnet. Im Sinne der vorliegenden Erfindung liegt eine W/O Emulsion dann vor, wenn der Volumenanteil der nicht wassermischbaren Phase oberhalb von 50% liegt.

Eine Flüssigkeit, die eine kontinuierliche, nicht wassermischbare Phase im Sinne der vorliegenden Erfindung darstellt, ist dadurch gekennzeichnet, dass die Sättigungskonzentration von Wasser in dieser Flüssigkeit bei einer Temperatur von 25 °C nicht mehr als 5 Gew.-% beträgt.

Der D90-Wert der die wässrige Phase enthaltenden Tröpfchen gibt an, dass 90 Vol.-% der Tröpfchen der W/O Emulsion eine Größe unterhalb des angegebenen Wertes aufweisen. Der D90-Wert kann aus volumengewichteten kumulativen Partikelgrößenverteilungen ermittelt werden, wobei die Partikelgrößenverteilungskurve mit Hilfe dynamischer Lichtstreumethoden gemessen werden kann.

Der HLB-Wert (Hydrophilic-Lipohilic-Balance) dient zur quantitativen Klassifizierung von amphiphilen Molekülen entsprechend der inneren Struktur des Amphiphils, wobei eine Aufgliederung des Amphiphils in eine lipophile und eine hydrophile Gruppe vorgenommen wird. Der HLB-Wert gemäß vorliegender Erfindung berechnet sich nach folgender Formel und kann auf der willkürlichen Skala Werte von Null bis 20 annehmen:

$$HLB = 20 \cdot (1 - M_l / M)$$

mit

$M_l$: Molmasse der lypophilen Gruppe des Amphiphils

M: Molmasse des Amphiphils

Eine erfindungsgemäße W/O Emulsion kann bei Zugabe einer hinreichenden Menge an Wasser, das zusätzlich ein Amphiphil mit einem HLB-Wert von größer als 8 enthält, eine O/W Emulsion bilden, die nach Polymerisation der monomeren Bestandteile (M) oder nach Ablauf einer Stufenwachstumsreaktion in der Mischung ($M_n$) der di- oder polyfunktionalen organischen Verbindungen eine stabile wässrige Dispersion bildet, in der der dispergierte Feststoffanteil weitestgehend aus vom organischen Bindemittel eingekapselten Pigmentpartikeln besteht. Durch derartig eingekapselte Pigmentpartikel wird der Kontakt der Pigmentpartikel mit der wässrigen Phase minimiert und so erreicht, dass eine hohe Stabilität der Pigmentpartikel auch dann erzielt wird, wenn die wässrige Phase korrosiv wirkende Verbindungen enthält. Zugleich weist der dispergierte Feststoffanteil eine durch die Größe der Wassertröpfchen begrenzte und damit vergleichsweise enge Partikelgrößenverteilung auf, so dass bei Wahl eines geeigneten Amphiphils in der der W/O Emulsion hinzugesetzten Menge Wasser auch eine sehr gute Stabilität gegenüber Agglomeration der dispergierten Bestandteile in der O/W Emulsion gewährleistet wird.

Die in der erfindungsgemäßen W/O Emulsion enthaltenen anorganischen Verbindungen in Partikelform können vorzugsweise ausgewählt sein aus schwerlöslichen Phosphaten der Metalle Zn, Fe, Mn, Ni, Ca und Co. Derartige schwerlösliche Phosphate entfalten in einer Beschichtung einer metallischen Oberfläche mit einer aus der W/O Emulsion hergestellten wässrigen Dispersion enthaltend das organische Bindemittel und die entsprechenden anorganischen Partikel beispielsweise eine zusätzliche Korrosionsschutzwirkung.

Die in der erfindungsgemäßen W/O Emulsion enthaltenen anorganischen Verbindungen in Partikelform können ebenfalls vorzugsweise ausgewählt sein aus schwerlöslichen Oxiden oder Hydroxiden der Metalle und Halbmetalle Zr, Ti, Hf, Si, Sn, In und Cr oder schwerlöslichen Sulfaten oder Carbonaten der Metalle Ba und Ca, wobei derartige schwerlösliche Oxide, Hydroxide, Sulfate und Carbonate für die Beschichtung eines Werkstoffes mit einer aus der erfindungsgemäßen W/O Emulsion hergestellten wässrigen Dispersion enthaltend das Bindemittel und die anorganischen Partikel beispielsweise die Eigenschaften von Farb- oder Korrosionsschutzpigmenten sowie Füllstoffen besitzen.

Weiterhin können die in der erfindungsgemäßen W/O Emulsion enthaltenen anorganischen Verbindungen in Partikelform vorzugsweise ausgewählt sein aus schwerlöslichen Sulfiden der Elemente Sb, Bi, Ni, Co und/oder Mo, wobei derartige schwerlöslichen Sulfide für die Beschichtung eines Werkstoffes mit einer aus der erfindungsgemäßen W/O Emulsion hergestellten wässrigen Dispersion enthaltend das Bindemittel und die anorganischen Partikel beispielsweise die Eigenschaften von Farb- oder Leitfähigkeitspigmenten besitzen sowie als Umformhilfsmittel dienen können.

Schwerlöslich sind die zuvor genannten Verbindungen in Partikelform dann, wenn ihre Sättigungskonzentration in Wasser bei einem pH-Wert von 7 und einer Temperatur von 25 °C nicht größer als $10^{-6}$ mol/l ist.

Des Weiteren können die in der erfindungsgemäßen W/O Emulsion enthaltenen metallischen Verbindungen in Partikelform vorzugsweise ausgewählt sein aus Metallen oder Legierungen der Elemente Sn, Fe, Ni, Co, Cu, Pt, Pd und/oder Ag mit einem Fremdatomanteil von weniger als 50 At.-%. Derartige metallische Partikel dienen in einer Beschichtung eines Werkstoffes mit einer aus der erfindungsgemäßen W/O Emulsion hergestellten wässrigen Dispersion enthaltend das Bindemittel und die metallischen Partikel beispielsweise als Leitfähigkeits- oder Korrosionsschutzpigment.

Die erfindungsgemäße W/O Emulsion kann dabei eine oder mehrere der zuvor genannten anorganischen oder metallischen Verbindungen in Partikelform enthalten.

Der massenbezogene Anteil der anorganischen und/oder metallischen Verbindungen in Partikelform beträgt in einer bevorzugten W/O Emulsion zumindest 0,1 Gew.-%, besonders bevorzugt zumindest 2 Gew.-%, aber vorzugsweise nicht mehr als 50 Gew.-%, besonders bevorzugt nicht mehr als 30 Gew.-% bezogen auf die W/O Emulsion.

Die erfindungsgemäße W/O Emulsion enthält zur Stabilisierung der Tröpfchen das Amphiphil (A1) mit einem HLB-Wert von kleiner als 10, wobei solche Amphiphile (A1) bevorzugt sind, die ausgewählt sind aus Niotensiden, besonders bevorzugt solche, die ausgewählt sind aus Polyoxoalkylenethern und/oder Polyglycerinfettsäureestern.

In einer besonders bevorzugten Ausführungsform der W/O Emulsion erfolgt die Stabilisierung der Wassertröpfchen in der Ölphase über Polyoxoalkylenether der folgenden allgemeinen Strukturformel (I):

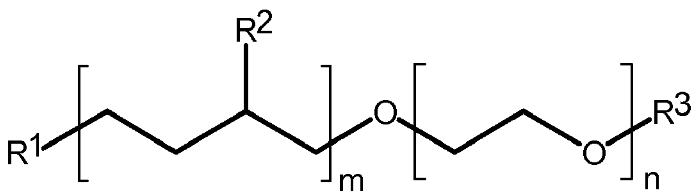

(I)

wobei die Reste $R^1$ und $R^2$ jeweils unabhängig voneinander ausgewählt sind aus H, F, $CF_3$, $CF_2H$, $CFH_2$ und $CH_3$ und der Rest $R^3$ ausgewählt ist aus H, $CH_3$, $C_2H_5$, $C_3H_7$ und $C_4H_9$; wobei m und n natürliche ganze Zahlen sind und die Summe m+n zumindest 10, vorzugsweise 100 ist; wobei das Verhältnis n/m vorzugsweise kleiner 1, besonders bevorzugt kleiner als 0,8 ist. Die Polyoxoalkylenether der allgemeinen Strukturformel (I) sind zudem hervorragend für die Stabilisierung erfindungsgemäßer W/O Emulsionen geeignet, die schwerlösliche Phosphate oder Oxide als anorganische Verbindungen in Partikelform enthalten, indem sie die Segregation der schwerlöslichen Phosphate und Oxide über einen Zeitraum von mehreren Tagen effektiv unterdrücken.

Besonders bevorzugte Vertreter der Polyoxoalkylenether der allgemeinen Strukturformel (I) weisen als Reste $R^1$ und $R^3$ jeweils ein Wasserstoff-Atom und als Rest $R^2$ eine Methyl-Gruppe auf.

In einer alternativen bevorzugten Ausführungsform der W/O Emulsion erfolgt die Stabilisierung der Wassertröpfchen in der Ölphase über Polyglycerinfettsäureestern mit mindestens einer gesättigten Fettsäure mit 12 bis 22 C-Atomen oder mindestens einer ungesättigten Fettsäure mit 16 bis 22 C-Atomen. Derartige gesättigte Fettsäuren sind vorzugsweise ausgewählt aus Laurinsäure, Tridecansäure, Myristinsäure, Palmitinsäure, Margarinsäure, Stearinsäure, Arachinsäure und Behensäure sowie Mischungen hieraus.

Als ungesättigte Fettsäurekomponenten eignen sich als bevorzugte Bestandteile der Polyglycerinfettsäureester monoethylenisch ungesättigte Säuren, beispielsweise Hexadecensäuren, Octadecensäuren wie Ölsäure (cis-9-Octadecensäure) oder Elaidinsäure (trans-9-Octadecensäure), Eicosensäuren und Docosensäuren wie Erucasäure (cis-13-Docosensäure) oder Brassidinsäure (trans-13-Docosensäure), mehrfach ungesättigte Fettsäuren, beispielsweise Octadecadiensäuren und Octadecatriensäuren wie Linolsäure und Linolensäure, sowie Mischungen hieraus und entsprechende dimere Fettsäuren, beispielsweise Dilinolsäure.

Es können auch Mischungen der Polyoxoalkylenether und Polyglycerinfettsäureester als Niotenside für die Bereitstellung der erfindungsgemäßen W/O Emulsion verwendet werden, vorzugsweise Mischungen der zuvor genannten Vertreter dieser Niotenside.

Der massenbezogene Anteil der Amphiphilen beträgt in einer bevorzugten W/O Emulsion zumindest 0,01

Gew.-%, besonders bevorzugt zumindest 1,0 Gew.-%, aber vorzugsweise nicht mehr als 10 Gew.-% bezogen auf die W/O Emulsion.

Die W/O Emulsion enthält ferner vorzugsweise weniger als 10 Gew.-%, besonders bevorzugt weniger als 1 Gew.-% an Cotensiden ausgewählt aus geradkettigen Alkoholen mit zumindest 4 Kohlenstoffatomen bezogen auf die W/O Emulsion.

Die erfindungsgemäße W/O Emulsion ist durch das Vorliegen einer kontinuierlichen nicht wassermischbaren Phase gekennzeichnet, die zumindest teilweise aus mindestens einem Monomer (M) und/oder einer Mischung ($M_n$) von di- oder polyfunktionalen organischen Verbindungen zusammengesetzt ist, wobei die jeweiligen Monomere (M) untereinander Polymerisationsreaktionen und die di- oder polyfunktionalen organischen Verbindungen der Mischung ($M_n$) miteinander Stufenwachstumsreaktionen eingehen können.

Die Monomere (M) sind in einer bevorzugten Ausführungsform der W/O Emulsion ausgewählt aus ethylenisch ungesättigten organischen Verbindungen, Epoxiden, blockierten Isocyanaten, Oxetanen und/oder Benzoxazinen, besonders bevorzugt ausgewählt aus ethylenisch ungesättigten organischen Verbindungen.

Als Vertreter der in einer besonders bevorzugten Ausführungsform der W/O Emulsion enthaltenen organischen ethylenisch ungesättigten organischen Verbindungen können Monomere (M) mit oder ohne Säuregruppe in der erfindungsgemäßen W/O Emulsion eingesetzt werden. Typische Monomere (M) auf Basis ethylenisch ungesättigter Verbindungen sind in einer bevorzugten erfindungsgemäßen W/O Emulsion Maleinsäure, Methylmaleinsäure, Fumarsäure und ihre jeweiligen Säureester, (Meth)acrylsäureester, Itaconsäureester, sowie Vinylether, Vinylphosphonsäureester und/ oder Styrol, wobei die Säureester und Ether jeweils vorzugsweise ausgewählt sind aus Ester und Ether aliphatischer Alkohole mit nicht mehr als sechs Kohlenstoffatomen oder Ester und Ether funktionalisierter Alkohole wie 3-Methylbut-3-en-1-ol, 3-Methyl-2-buten-1-ol, Ethylenglykol, Propylenglykol, Butylenglykol, Polyethylenglykol, Polypropylenglykol, Oxiran-2-yl-methanol, 3-Hydroxypropansäure, 3-Hydroxypropyltrimethoxysilan, 3-Hydroxypropyltriethoxysilan, 2-Hydroxyethyl-N-imidazol, 2-Hydroxyethyl-N-pyrolidon, 2-Hydroxyethyl-N-morpholin und 2-Hydroxyethyl-N-piperidin, 2-Hydroxyethyl-N-oxazolidon.

Eine Mischung ($M_n$) von di- oder polyfunktionalen organischen Verbindungen enthält in einer bevorzugten Ausführungsform der W/O Emulsion sowohl zumindest eine organische Verbindung mit zumindest zwei Epoxid-Gruppen als auch zumindest eine organische Verbindungen mit zumindest zwei funktionalen Gruppen ausgewählt aus primären und/oder sekundären Amino-Gruppen, Hydroxyl-Gruppen, Carboxyl-Gruppen, blockierten Isocyanat-Gruppen und/oder Thiol-Gruppen.

Die Isocyanat-Gruppen sind in den Mischungen ($M_n$) der W/O Emulsion stets mit Schutzgruppen blockiert. Optional gilt dies auch für die Amino-, Hydroxyl-, Carboxyl- und/oder Thiol-Gruppen der di- oder polyfunktionalen organischen Verbindungen der Mischung ($M_n$), die zumindest teilweise mit dem Fachmann bekannten organischen Schutzgruppen maskiert vorliegen können, so dass eine Stufenwachstumsreaktion in der kontinuierlichen Phase der W/O Emulsion enthaltend die Mischung ($M_n$) bei Temperaturen unterhalb von 50 °C unterbleibt.

Als Vertreter der organischen Verbindungen mit Epoxid-Gruppen, die als di- oder polyfunktionale organische Verbindungen der Mischung ($M_n$) zumindest teilweise die kontinuierliche nicht wassermischbare Phase der erfindungsgemäßen W/O Emulsion bilden, dienen vorzugsweise nicht vollständig vernetzte, oligomere oder polymere Verbindungen mit freien, beispielsweise endständig gebundenen Epoxid-Gruppen, deren bevorzugtes zahlenmittleres Molekulargewicht nicht kleiner als 250 u und nicht größer als 5000 u ist. Beispiele für solche organische Verbindungen mit Epoxid-Gruppen sind Epichlorhydrin-Addukte an Bisphenol A und Bisphenol F, sowie Epoxy-Phenol-Novalake. Bevorzugt werden im Rahmen der vorliegenden Erfindung Epoxid-Harze eingesetzt, die der folgenden allgemeinen Strukturformel (II) entsprechen:

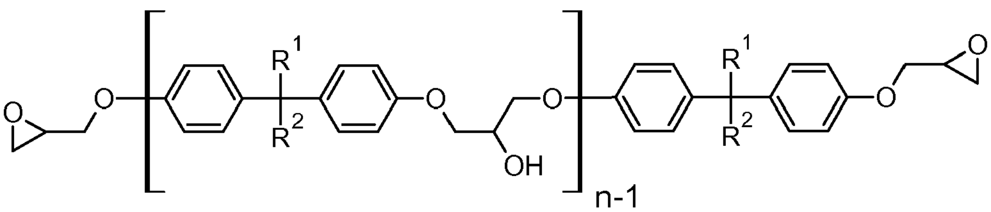

(II)

mit n als ganzzahliger Zahl von 1 bis 50, wobei die Reste $R^1$ und $R^2$ unabhängig voneinander ausgewählt sind aus Wasserstoff, $-CH_3$ und $-C_2H_5$.

Besonders bevorzugte Epoxide besitzen ein Epoxy-Äquivalentgewicht (EEW) von nicht weniger als 100 g/eq, aber nicht mehr als 5000 g/eq. Das EEW gibt dabei die zahlenmittlere Molmasse pro Mol Epoxid-Funktionalität im Epoxid in Gramm pro Moläquivalent (g/eq) wieder. Für spezifische Epoxide existieren dabei besonders bevorzugte Bereiche für das Epoxy-Äquivalentgewicht:

| | | |
|---|---|---|
| Bromierte Epoxide | 300 - 1000 | g/eq, insbesondere 350 - 600 |
| Polyalkylenglykol Epoxide | 100 - 700 | g/eq, insbesondere 250 - 400 |
| Flüssige Epoxide | 150 - 250 | g/eq |
| Feste/pastöse Epoxide | 400 - 5000 | g/eq, insbesondere 600 - 1000 |

Als reaktive di- oder polyfunktionale organische Verbindungen, die mit den zuvor beschriebenen di- oder polyfunktionalen Epoxiden eine Mischung ($M_n$) bilden, werden vorzugsweise Phenolharze, Polyalkylenglykole, blockierte Polyisocyanate oder Aminoplaste mit einem zahlenmittleren Molekulargewicht von jeweils nicht mehr als 10.000 u, vorzugsweise nicht mehr als 2.000 u eingesetzt. Die hierfür einsetzbaren Phenolharze weisen vorzugsweise ein Hydroxyl-Äquivalentgewicht (HEW) von nicht weniger als 50 g/eq, besonders bevorzugt von nicht weniger als 200 g/eq auf, aber vorzugsweise ist das HEW nicht größer als 1000 g/eq und besonders bevorzugt nicht größer als 500 g/eq. Das HEW gibt dabei die zahlenmittlere Molmasse pro Mol Hydroxy-Funktionalität im Phenolharz in Gramm pro Moläquivalent (g/eq) wieder, wobei das Hydroxyl-Äquivalentgewicht dabei auch geschützte Hydroxyl-Gruppen im Polymergrundgerüst des Phenolharzes umfasst, die über Kondensations- oder Additionsreaktionen temporär mit niedermolekularen organischen Verbindungen verknüpft vorliegen, aber bei erhöhter Temperatur oder pH Verschiebung unter Vernetzung mit den di- oder polyfunktionalen Epoxid-Verbindungen der Mischung ($M_n$) wieder abgespalten werden. Eine bevorzugte "Schutzgruppe" sind niedermolekulare Alkohole, welche die Hydroxyl-Gruppe temporär in eine EtherGruppe umwandeln.

Es ist weiterhin bevorzugt, dass die Hydroxyl-Gruppen der neben den di- oder polyfunktionalen Epoxid-Verbindungen in der Mischung ($M_n$) enthaltenen Phenolharze zu mehr als 50 %, besonders bevorzugt zu mehr als 80 % verethert vorliegen. Die Hydroxyl-Gruppen liegen dabei vorzugsweise methoxyliert, ethoxyliert, propoxyliert, butoxyliert oder ethenyloxyliert vor.

Als Phenol-Harz-Typen können Polykondensationsprodukte von Formaldehyd mit Phenolen eingesetzt werden, bspw. Resole oder Novolake.

Sollten Epoxide oder generell Monomere (M) und/oder di- oder polyfunktionalen organische Verbindungen einer Mischung ($M_n$), die als solche bei 20-50°C fest oder pastös sind, für die Bereitstellung der kontinuierlichen nicht wassermischbaren Phase der W/O Emulsion verwendet werden, ist zumindest ein weiteres Monomer (M) oder zumindest eine weitere di- oder polyfunktionale organische Verbindung, die als solche bei 20-50°C flüssig ist und sich als Lösemittel eignet, hinzuzufügen. Ein solches zusätzliches nicht wassermischbares Monomer bzw. eine solche di- oder polyfunktionale organische Verbindung muss in der Lage sein, mit sich selbst zu polymerisieren bzw. mit zumindest einer Verbindung der Mischung ($M_n$) eine Stufenwachstumsreaktion eingehen zu können.

Di- oder polyfunktionale organische Verbindungen, die als reaktives nicht wassermischbares Lösemittel fungieren und typischerweise zu Mischungen ($M_n$) enthaltend feste oder pastöse Epoxid-Harze hinzuformuliert werden können, sind niedermolekulare bifunktionale Epoxide mit einem Epoxy-Äquivalentgewicht von nicht mehr als 400 g/eq und einem zahlenmittleren Molekulargewicht von nicht mehr als 500 u, beispielsweise 1,6-Hexamethylendiol-diglycidylether, Polyethylenglykol-diglycidylether, 2,2-dimethylpropandiol-diglycidylether oder 1,1,1-(trimethylolglycidylether)-propan.

Alternativ kann zusätzlich auch ein inertes nicht wassermischbares Lösemittel, das mit den Monomeren (M) und den di- oder polyfunktionalen organischen Verbindungen der Mischung ($M_n$) keine Polymerisations- oder Stufenwachstumsreaktionen eingehen kann, eingesetzt werden, um Monomere in fester Form zu lösen und so die kontinuierliche nicht wassermischbare Phase zu bilden. Unabhängig von der Art der Monomere (M) oder der Mischung ($M_n$) der di- oder polyfunktionalen organischen Verbindungen kann stets ein inertes nicht wassermischbares Lösemittel hinzuformuliert werden, um den Mengenanteil der Monomere (M) und/oder Mischung ($M_n$) der di- oder polyfunktionalen organischen Verbindungen bezogen auf den Anteil der anorganischen und/oder metallischen Verbindungen in Partikelform in der erfindungsgemäßen W/O Emulsion zu variieren. Vorzugsweise besitzen derartige inerte nicht wassermischbare Lösemittel einen Siedepunkt bei Standarddruck von nicht mehr als 150 °C, besonders bevorzugt von nicht mehr als 100 °C und insbesondere bevorzugt von nicht mehr als 80 °C.

Unabhängig davon, ob das nicht wassermischbare Lösemittel inert oder reaktiv ist, so beträgt die dynamische Viskosität des Lösemittels, das dem zumindest einem Monomer (M) oder der Mischung ($M_n$) der di- oder polyfunktionalen organischen Verbindungen hinzuformuliert ist, vorzugsweise nicht mehr als $10^3$ $mPa \cdot s^{-1}$.

Eine kontinuierliche nicht wassermischbare Phase, die zumindest aus zwei Monomeren (M) und/oder zumindest einer Mischung ($M_n$) von di- oder polyfunktionalen organischen Verbindungen zusammengesetzt ist, weist vorzugsweise eine untere Entmischungstemperatur von weniger als 25°C, besonders bevorzugt von weniger als 10 °C und eine obere Entmischungstemperatur von vorzugsweise mehr als 60 °C, besonders bevorzugt von mehr als 80 °C auf. Die Entmischungstemperatur ist dabei diejenige Temperatur, bei der in der Mehrkomponentenmischung als solche das Auftreten von kritischer Opaleszenz mit Hilfe von Lichtstreumethoden festgestellt wird.

Der massenbezogene Anteil der Monomere (M) und/oder der Mischung ($M_n$) der di- oder polyfunktionalen

organischen Verbindungen inklusive gleichartiger Verbindungen, die als reaktive Lösemittel eingesetzt werden, an der kontinuierlichen nicht wassermischbaren Phase beträgt in einer bevorzugten erfindungsgemäßen W/O Emulsion zumindest 10 Gew.-%, besonders bevorzugt zumindest 30 %.

Eine erfindungsgemäße W/O Emulsion ist erhältlich durch Vereinigung von Volumina von Präkursor - W/O Emulsionen unter Einwirkung einer Scherkraft, wobei die Volumina der Präkursor - W/O Emulsionen jeweils enthalten:

a) zumindest ein Edukt ($E_i$) oder zumindest ein Edukt ($E_j$) in der wässrigen Phase, wobei die Tröpfchen der wässrigen Phase einen D90-Wert von nicht mehr als 10 μm aufweisen;
b) eine kontinuierliche nicht wassermischbare Phase, die zumindest teilweise aus mindestens einem Monomer (M) und/oder einer Mischung ($M_n$) von di- oder polyfunktionalen organischen Verbindungen zusammengesetzt ist, wobei die jeweiligen Monomere (M) untereinander Polymerisationsreaktionen und die di- oder polyfunktionalen organischen Verbindungen der Mischung ($M_n$) miteinander Stufenwachstumsreaktionen eingehen können; und
c) mindestens ein Amphiphil (A1) mit einem HLB-Wert von kleiner als 10; wobei die Präkursor - W/O Emulsionen solche mit zumindest einem Edukt ($E_i$) als auch solche mit zumindest einem Edukt ($E_j$) umfassen und die Edukte ($E_i$) und ($E_j$) die Edukte zumindest einer Fällungsreaktion ($R_{ij}$) mit negativer Standard-Reaktionsenthalpie $\Delta H°_R$ bilden, wobei die Edukte ($E_i$) und ($E_j$) der Fällungsreaktion ($R_{ij}$) in einer solchen Menge in der jeweiligen wässrigen Phase der Präkursor - W/O Emulsionen enthalten sind, dass bei Vereinigung entsprechender Volumenfraktionen der wässrigen, aber amphiphilfreien Phasen der Präkursor - W/O Emulsionen bei Standardtemperatur spontan eine Ausfällung der anorganischen und/oder metallischen Verbindung gemäß der zumindest einen Fällungsreaktion ($R_{ij}$) erfolgt.

Eine spontane Ausfällung liegt dann vor, wenn im Retentat einer Ultrafiltration der entsprechenden vereinigten Volumenfraktionen oder vereinigten identischen Vielfachen der Volumenfraktionen der jeweiligen wässrigen Phasen der Präkursor - W/O Emulsionen zehn Minuten nach deren Vereinigung zumindest 10 % des Trockenrückstandes der vereinigten Volumenfraktionen oder vereinigten identischen Vielfachen der Volumenfraktionen zurückgehalten wird, wobei die Ultrafiltration mit einer Ausschlussgrenze von 50 kDa erfolgt.

Eine erfindungsgemäße W/O Emulsion ist bevorzugt erhältlich durch Vereinigung von Volumina zweier W/O Emulsionen W/O(1) und W/O(2) unter Einwirkung einer Scherkraft, wobei die Volumina jeweils

a) die wässrige Phase enthaltende Tröpfchen, wobei die Tröpfchen einen D90 Wert von nicht mehr als 10 μm aufweisen,
b) eine kontinuierliche nicht wassermischbare Phase, die zumindest teilweise aus mindestens einem Monomer (M) und/oder einer Mischung ($M_n$) von di- oder polyfunktionalen organischen Verbindungen zusammengesetzt ist, wobei die jeweiligen Monomere (M) untereinander Polymerisationsreaktionen und die di- oder polyfunktionalen organischen Verbindungen der Mischung ($M_n$) miteinander Stufenwachstumsreaktionen eingehen können, und
c) mindestens ein Amphiphil (A1) mit einem HLB-Wert von kleiner als 10 enthalten,

wobei die W/O Emulsion W/O(1) zumindest ein Edukt ($E_i$) und die W/O Emulsion W/O(2) zumindest ein Edukt ($E_j$) in der wässrigen Phase gelöst enthält und die Edukte ($E_i$) und ($E_j$) die Edukte zumindest einer Fällungsreaktion ($R_{ij}$) mit negativer Standard-Reaktionsenthalpie $\Delta H°_R$ bilden, wobei die Edukte der Fällungsreaktion ($R_{ij}$) in einer solchen Menge in der jeweiligen wässrigen Phase der W/O Emulsionen W/O(1) und W/O(2) enthalten sind, dass bei Vereinigung entsprechender Volumenfraktionen der jeweiligen wässrigen, aber amphiphilfreien Phasen der W/O Emulsionen W/O(1) und W/O(2) bei Standardtemperatur spontan eine Ausfällung der anorganischen und/oder metallischen Verbindung gemäß der zumindest einen Fällungsreaktion ($R_{ij}$) erfolgt.

Eine spontane Ausfällung liegt dann vor, wenn im Retentat einer Ultrafiltration der entsprechenden vereinigten Volumenfraktionen oder vereinigten identischen Vielfachen der Volumenfraktionen der jeweiligen wässrigen Phasen der W/O Emulsionen W/O(1) und W/O(2) zehn Minuten nach deren Vereinigung zumindest 10 % des Trockenrückstandes der vereinigten Volumenfraktionen zurückgehalten wird, wobei die Ultrafiltration mit einer Ausschlussgrenze von 50 kDa erfolgt.

Die erfindungsgemäße W/O Emulsion ist vorzugsweise erhältlich durch Vereinigung von Volumina der Präkursor - W/O Emulsionen, die sämtlich einen D10-Wert von mehr als 0,03 μm, besonders bevorzugt von mehr als 0,05 μm aufweisen. Ein D10-Wert von 0,03 μm besagt, dass 10 Vol.-% der Tröpfchen der W/O Emulsion eine Größe von nicht mehr als 30 nm aufweisen. Der D10-Wert kann analog zum D90-Wert aus volumengewichteten kumulativen Partikelgrößenverteilungen ermittelt werden, wobei die Partikelgrößenverteilungskurve mit Hilfe dynamischer Lichtstreumethoden gemessen werden kann.

Die Vereinigung der Volumina der Präkursor - W/O Emulsionen erfolgt unter Einwirkung einer Scherkraft, vorzugsweise mittels Hochdruckhomogenisator mit einem Energieeintrag im Bereich von $10^3$-$10^5$ J pro Sekunde pro Liter der W/O Emulsion. Die Scherkraft bei der Vereinigung der Präkursor - W/O Emulsionen kann auch mittels Ultraschall

herbeigeführt werden, wobei die Ultraschallbehandlung vorzugsweise bei 10-60 kHz und nicht länger als 300 Sekunden mit einer solchen Ausgangsleistung der Ultraschallquelle erfolgt, die im Behandlungszeitraum eine Erwärmung der bei einer Mischungstemperatur von 25 °C vereinigten Volumina um zumindest 1 °C, aber um nicht mehr als 10 °C bewirkt.

Die Edukte ($E_i$) und ($E_j$) einer Fällungsreaktion ($R_{ij}$) in wässriger Phase, deren Endprodukt jeweils eine anorganische und/oder metallische Verbindung in fester Form ist, können vorzugsweise ausgewählt sein aus folgenden Gruppen:

| | |
|---|---|
| Gruppe A: | wasserlösliche Phosphate der Alkalimetalle sowie $(NH_4)_3PO_4$; |
| Gruppe B: | wasserlösliche Sulfide der Alkalimetalle sowie $(NH_4)_2S$; |
| Gruppe C: | wasserlösliche Sulfate der Alkalimetalle sowie $(NH_4)_2SO_4$; |
| Gruppe D: | wasserlösliche anorganische Verbindungen, die eine Quelle für Metallkationen der Elemente Zr, Ti, Hf, Si, Sn, Zn, Ce, In und/oder Cr darstellen; Hydrogensulfide der Elemente Sb, Bi, Ni, Co und/oder Mo; Mono- oder Dihydrogenphosphate der Elemente Zn, Fe, Mn, Ni, Ca und/oder Co; |
| Gruppe E: | wasserlösliche anorganische Verbindungen der Elemente Sn, Fe, Ni, Co, Cu, Pt, Pd und/oder Ag; |
| Gruppe A': | wasserlösliche Salze der Elemente Zn, Fe, Mn, Ni, Ca und/oder Co; |
| Gruppe B': | wasserlösliche Salze der Elemente Sb, Bi, Ni, Co und/oder Mo; |
| Gruppe C': | wasserlösliche Bariumsalze; |
| Gruppe D': | wasserlösliche Hydroxide der Alkali- und Erdalkalimetalle sowie $NH_4OH$; |
| Gruppe E': | wasserlösliche anorganische Verbindungen der Elemente N, P, S in mittlerer Oxidationszahl oder wasserlösliche organische Verbindungen, die jeweils bei Oxidationsreaktionen, die mit einem Übergang von nicht mehr als zwei Elektronen verbunden sind, ein Standardreduktionspotential aufweisen, das negativer als +0,2 V (SHE) liegt, bevorzugte wasserlösliche anorganische Verbindungen sind Schweflige Säure, Hypophosphorige Säure, Phosphorige Säure, Hydrazin, Hydroxylamin und bevorzugte wasserlösliche organische Verbindungen sind Zitronensäure, Ascorbinsäure, 1,4-Dihydroxyphenol; |

wobei Edukte ($E_i$) der Gruppe A, B, C, D oder E ein Edukt ($E_j$) der jeweils korrespondierenden Gruppe Gruppe A', B', C', D' oder E' bedingen. So bedingt beispielsweise eine W/O Emulsion W/O(1) enthaltend ein Edukt ($E_i$) aus der Gruppe A die Vereinigung mit einer W/O Emulsion W/O(2) enthaltend ein Edukt ($E_j$) aus der Gruppe A', um eine bevorzugte erfindungsgemäße W/O Emulsion zu erhalten.

Die Edukte ($E_i$) und ($E_j$) sind wasserlöslich, wenn ihre Sättigungskonzentration in Wasser mit einem pH-Wert von 7 bei einer Temperatur von 25 °C zumindest 10 g/l beträgt.

Die jeweiligen Fällungsreaktionen ($R_{ij}$), die zu bevorzugten W/O Emulsionen führen, können daher den folgenden allgemeinen Reaktionsgleichungen (Gl. 1 - Gl. 5) zugeordnet werden.

Fällungsreaktionen A-A':

$$\mathrm{n\,Alkali_3(PO_4)_{(aq)} + 3/m\,Me_m^{n+}X_n^{m-}{}_{(aq)} \rightarrow Me_3^{n+}(PO_4)_n^{3-}{}_{(s)} + 3n\,Alkali\,X_m^{m-}{}_{(aq)}} \quad \text{(Gl. 1)}$$

Fällungsreaktionen B-B':

$$\mathrm{n\,Alkali_2S_{(aq)} + 2/m\,Me_m^{n+}X_n^{m-}{}_{(aq)} \rightarrow Me_2^{n+}S_n^{2-}{}_{(s)} + 2n\,Alkali\,X_m^{m-}{}_{(aq)}} \quad \text{(Gl. 2)}$$

Fällungsreaktionen C-C':

$$\mathrm{n\,Alkali_2(SO_4)_{(aq)} + 1/m\,Ba_m^{2+}X_n^{m-}{}_{(aq)} \rightarrow Ba(SO_4)_{(s)} + 2n\,Alkali\,X_m^{m-}{}_{(aq)}} \quad \text{(Gl. 3)}$$

jeweils mit
Alkali: $NH_4$, Li, Na und/oder K
Me: Zn, Fe, Mn, Ni, Ca und/oder Co
X: Anion des wasserlöslichen Salzes
n: Ladung des Kations Me
m: Ladung des Anions X

Fällungsreaktionen D-D':

$$Me^{n+}{}_{(aq)} + 2\,M^{m+}(OH)_{m\,(aq)} \rightarrow Me_2^{n+}O_{n\,(s)} + n\,H_2O + 2\,M^{m+}{}_{(aq)} \qquad \text{(Gl. 4a)}$$

mit Me: Zr, Ti, Hf, Si, Sn, Zn, Ce, In und/oder Cr;

$$Me^{n+}(HS)_{n\,(aq)} + n/m\,M^{m+}(OH)_{m\,(aq)} \rightarrow MeS_{n/2\,(s)} + M^{m+}_{n/m}S_{n/2\,(aq)} + n\,H_2O \qquad \text{(Gl. 4b)}$$

mit Me: Sb, Bi, Ni, Co und/oder Mo; oder

$$(x+1)Me^{n+}_{(3-x)}(H_xPO_4)^{(3-x)-}_{n}{}_{(aq)} + nx/m\,M^{m+}(OH)_{m(aq)} \rightarrow$$

$$Me_3(PO_4)_{n\,(s)} + (2x - x^2)Me^{n+}{}_{(aq)} + nx/m\,M^{m+}{}_{(aq)} + nx(HPO_4)^{(3-x)-}{}_{(aq)} + nx\,H_2O \qquad \text{(Gl. 4c)}$$

mit Me: Zn, Fe, Mn, Ni, Ca und/oder Co
jeweils mit
n: Ladung des Kations Me
M: Li, Na, K, Mg, Ca und $NH_4$
m: Ladung des Kations M
x: natürliche Zahl 1 oder 2

Fällungsreaktionen E-E':

$$Me^{n+}{}_{(aq)} + Red \rightarrow Me^{0}{}_{(s)} + Ox \qquad \text{(Gl. 5)}$$

mit
$Red \rightarrow Ox + ne^-$ $E^0(Red/Ox) < +0{,}2$ V (SHE)
$E^0(Red/Ox)$: Standardreduktionspotential
Me: Sn, Fe, Ni, Co, Cu, Pt, Pd und/oder Ag
n: Ladung des Kations Me

Die Edukte ($E_i$) und ($E_j$) sind in den Präkursor - W/O Emulsionen vorzugsweise in einer Konzentration von zumindest $10^{-4}$ Mol pro Liter der jeweiligen wässrigen Phase enthalten, um die Produkte der Fällungsreaktionen ($R_{ij}$) in signifikanten Mengen und hinreichend schnell zu erzeugen. Weiterhin ist es bevorzugt, das die zur Fällungsreaktion ($R_{ij}$) zugehörigen Edukte ($E_i$) und ($E_j$) in den jeweiligen Präkursor - W/O Emulsionen in nahezu stöchiometrischen Mengen enthalten sind, so dass das Verhältnis der Produkte aus der Konzentration an Edukt ($E_i$) und Edukt ($E_j$) mit dem jeweiligen Volumen der wässrigen Phase der entsprechenden Präkursor - W/O Emulsion sich nicht um mehr als 10 % vom stöchiometrischen Verhältnis gemäß der entsprechenden Fällungsreaktion ($R_{ij}$) unterscheidet.

Ebenso betrifft die vorliegende Erfindung die Herstellung einer erfindungsgemäßen W/O Emulsion, bei der Volumina von Präkursor - W/O Emulsionen, die jeweils zumindest ein Edukt ($E_i$) oder zumindest ein Edukt ($E_j$) einer Fällungsreaktion ($R_{ij}$) in der wässrigen Phase enthalten, vorzugsweise Volumina von zwei W/O Emulsionen W/O(1) und W/O(2), unter Einwirkung von Scherkräften auf die zuvor beschriebene Art und Weise homogenisiert werden, wobei die Volumina der Präkursor - W/O Emulsionen bzw. die Volumina der W/O Emulsionen W/O(1) und W/O(2) eine Zusammensetzung wie zuvor aufgeführt aufweisen können.

Die erfindungsgemäßen W/O Emulsionen enthaltend die anorganische und/oder metallische Verbindungen in Partikelform können durch Zugabe von Wasser und einem weiteren Amphiphil, dass die Bildung von Öltröpfchen in einer Wasserphase begünstigt und daher vorzugsweise einen HLB von größer als 8 aufweist, leicht in O/W-Emulsionen umgewandelt werden, die sich darin auszeichnen, dass die anorganischen und/oder metallischen partikulären Bestandteile weitestgehend von der Ölphase umschlossen vorliegen. Enthält die Ölphase ethylenisch ungesättigte Monomere (M), so kann eine Polymerisation dieser Monomere (M) initiiert werden, so dass letztlich wässrige Dispersionen enthalten werden, deren Feststoffanteil sowohl aus den anorganischen und/oder metallischen Partikeln als auch aus den polymerisierten Bestandteilen der ehemals öligen Phase besteht. Der Vorteil derartiger Dispersionen besteht insbesondere darin, dass die anorganischen und/oder metallischen Partikel irreversibel von den polymerisierten Feststoffbestandteilen

umschlossen vorliegen und diese damit weitestgehend geschützt vor in der wässrigen Phase enthaltenen korrosiven Verbindungen sind.

In einem weiteren Aspekt betrifft die vorliegende Erfindung daher eine wässrige Dispersion, deren dispergierter Feststoffanteil ein organisches Bindemittel und anorganische und/oder metallische Partikel umfasst, hergestellt aus der zuvor beschriebenen erfindungsgemäßen W/O Emulsion als Präkursor, die zumindest teilweise ethylenisch ungesättigte Monomere (M) in der kontinuierlichen nicht wassermischbaren Phase enthält. In dieser erfindungsgemäßen wässrigen Dispersion, die eine hohe Stabilität der partikulären Bestandteile gegenüber Agglomeration und korrosiven Medien innehat, weist der dispergierte Feststoffanteil einen D90-Wert von nicht mehr als 10 μm, vorzugsweise nicht mehr als 2 μm auf. Der D90-Wert der Partikel des dispergierten Feststoffanteils der wässrigen Dispersion gibt an, dass 90 Vol.-% der Tröpfchen der W/O Emulsion eine Größe unterhalb des angegebenen Wertes aufweisen. Der D90-Wert kann aus volumengewichteten kumulativen Partikelgrößenverteilungen ermittelt werden, wobei die Partikelgrößenverteilungskurve mit Hilfe dynamischer Lichtstreumethoden gemessen werden kann.

Eine erfindungsgemäße wässrige Dispersion ist erhältlich in einem Verfahren umfassend die folgenden Schritte i)-iii):

i) Herstellung einer O/W Emulsion durch Hinzugabe eines Volumens $V_1$ einer wässrigen Phase enthaltend mindestens ein Amphiphil (A2) mit einem HLB von größer als 8 zu einem Volumen $V_2$ einer erfindungsgemäßen W/O Emulsion enthaltend zumindest teilweise ethylenisch ungesättigte Monomere (M) in der kontinuierlichen nicht wassermischbaren Phase;
ii) Homogenisieren unter Einwirkung einer Scherkraft;
iii) Polymerisation der Monomere (M) enthaltend in der Ölphase der O/W Emulsion.

Geeignete Vorrichtungen zur Homogenisierung sind die Premier-Mühle oder Hochdruckhomogenisatoren, wobei die Hochdruckhomogenisatoren vorzugsweise mit einem Energieeintrag im Bereich von $10^3$-$10^5$ J pro Sekunde pro Liter des zu homogenisierenden Mediums arbeiten. Die Scherbeanspruchung überschreitet vorzugsweise keine Werte für die nach dem Schritt ii) optisch transparente Mischungen resultieren, die keine Opaleszenz zeigen.

Während die Polymerisation stets nach der Homogenisierung der Volumina $V_1$ und $V_2$ erfolgt, können die Schritte i) und ii) auch gleichzeitig erfolgen, wobei die wässrige Phase vorzugsweise kontinuierlich zum Volumen $V_2$ hinzugegeben wird und zwar zumindest in einer Menge $V_1$, für die die dynamische Viskosität gemessen mit einem Rotationsviskosimeter bei konstanter Winkelgeschwindigkeit als Funktion des kontinuierlich hinzugegebenen Volumens der wässrigen Phase ein Maximum aufweist.

Eine erfindungsgemäße wässrige Dispersion ist vorzugsweise dadurch erhältlich, dass das Verhältnis der Volumina $V_1/V_2$ im Schritt i) zumindest 0,8 : 1, vorzugsweise zumindest 3 : 1 beträgt. Durch die Zugabe dieser Mindestvolumina $V_2$ an wässriger Phase zu einer O/W Emulsion nach vorliegender Erfindung wird sichergestellt, dass nunmehr die Ölphase in einer kontinuierlichen wässrigen Phase dispergiert werden kann. Der Anteil der Ölphase am Gesamtvolumen sollte jedoch genügend groß sein, um wässrige Dispersionen zu erhalten, deren Feststoffanteil für die Bereitstellung von Beschichtungsmitteln aus wirtschaftlicher Sichtweise ausreichend ist. Insofern sollte das Verhältnis der Volumina $V_1/V_2$ im Schritt i) vorzugsweise nicht größer als 10 : 1 sein.

Für eine langzeitstabile Dispergierung der Ölphase nach dem Einwirken einer Scherkraft also nach dem Schritt ii) ist es bevorzugt, wenn das Amphiphil (A2) im Schritt i) ausgewählt ist aus anionischen Tensiden, besonders bevorzugt aus anionischen Tensiden mit einer Sulfat-, Sulfonat-, Sulfosuccinat-, Phosphat- oder Phosphonat-Gruppe und insbesondere bevorzugt aus Alkylbenzolsulfonaten, Alkansulfonaten, Methylestersulfonaten, α-Olefinsulfonaten, Alkylsulfaten und Alkylethersulfaten sowie die analogen Phosphonate und Phosphate.

Es hat sich gezeigt, dass insbesondere Dialkylsulfosuccinate der folgenden allgemeinen Strukturformel (III) besonders gute Dispergatoren bzw. Amphiphile (A2) für die Bereitstellung der erfindungsgemäßen wässrigen Dispersion sind:

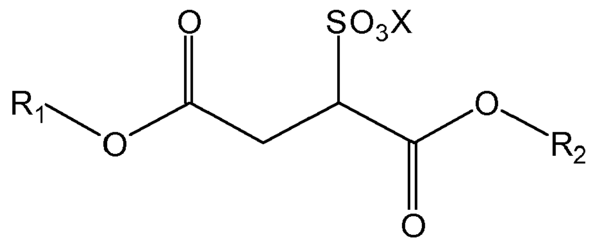

(III)

wobei $R_1$ und $R_2$ jeweils unabhängig voneinander ausgewählt sind aus verzweigten oder unverzweigten aliphatischen Resten mit mindestens 2 C Atomen, insbesondere mit mindestens 8 C-Atomen, aber nicht mehr als 30 C Atomen,

insbesondere nicht mehr als 20 C Atomen und der Rest X ein Wasserstoffatom oder Alkalimetallatom darstellt.

Insofern die Ölphase der als Präkursor für die Herstellung der erfindungsgemäßen wässrigen Dispersion dienenden W/O Emulsion solche Monomere (M) enthält die ethylenisch ungesättigte Doppelbindungen aufweisen, so eignen sich als Amphiphile (A2) insbesondere derivatisierte Polyoxyalkylenalkyl- bzw. Polyoxyalkylenarylethern, die in ihrem hydrophoben Grundgerüst eine ungesättigte Doppelbindung und im hydrophilen Grundgerüst eine anionische Kopfgruppe, vorzugsweise ausgewählt aus einer Sulfat-, Sulfonat-, Phosphat- und Phosphonat-Gruppe aufweisen. Derartige Amphiphile (A2) sind vorzugsweise ausgewählt aus Verbindungen, die der folgenden allgemeinen Strukturformel (IV) entsprechen:

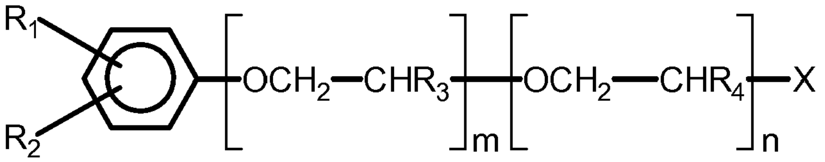

(IV)

wobei $R_1$ ein aliphatischer Rest mit nicht mehr als 14, vorzugsweise nicht mehr als 12 Kohlenstoff-Atomen, aber zumindest 3 Kohlenstoff-Atomen ist;
wobei $R_2$ ein ungesättigter Alkylrest mit nicht mehr als 6 Kohlenstoffatomen, aber zumindest 2 Kohlenstoff-Atomen ist;
wobei $R_3$ und $R_4$ unabhängig voneinander ausgewählt sind aus Wasserstoff oder einer Methyl-Gruppe; wobei m und n voneinander unabhängige natürliche Zahlen mit $1 \leq m+n \leq 60$ sind;
wobei X eine anionische Gruppe ausgewählt aus $-O-SO_3$, $-SO_3$, $-O-PO_3$ oder $-PO_3$ ist.

Die Polymerisation der emulgierten nicht wassermischbaren Phase enthaltend ethylenisch ungesättigte Monomere (M) im Schritt iii) zur Herstellung der erfindungsgemäßen wässrigen Dispersion erfolgt vorzugsweise durch den Zusatz von Initiatoren. Gut einsetzbare Initiatoren sind vorzugsweise thermisch oder aktinisch aktivierbar und vorzugsweise ausgewählt aus Radikal-Initiatoren oder Redox-Initiatoren. Geeignete Radikal-Initiatoren sind organische Azo- oder Peroxoverbindungen sowie typische durch aktinische Strahlung aktivierbare Radikalinitiatoren wie Ketone. Geeignete Redox-Inititatoren sind organische und anorganische Peroxide, Metallsalze oder reduzierend wirkende Zucker. Werden wasserlösliche Initiatoren eingesetzt, so braucht die Zugabe eines solchen Initiators erst unmittelbar vor dem Verfahrenschritt iii) zu erfolgen. Ist der Initiator jedoch kaum wasserlöslich, so sollte die Zugabe des wasserunlöslichen Initiators bereits zu derjenigen erfindungsgemäßen W/O Emulsion erfolgen, aus der die wässrige Dispersion hervorgehen soll. Der Einsatz wasserlöslicher Initiatoren ist für die Herstellung der erfindungsgemäßen wässrigen Dispersion bevorzugt.

In einer bevorzugten Ausführungsform kann die wässrige Dispersion unmittelbar als selbstabscheidendes Beschichtungsmittel für Oberflächen aus Eisen, Stahl, Zink und/oder Aluminium eingesetzt werden. Zu diesem Zweck enthält das Volumen $V_1$ der wässrigen Phase als Amphiphil (A2) anionische Tenside und zusätzlich eine Menge an Fluorid-Ionen und Eisen(III)-Ionen oder werden der wässrigen Dispersion in einem dem Schritt iii) nachfolgenden Schritt hinzugegeben, beispielsweise in Form wasserlöslicher Salze. Die Fluorid-Ionen und Eisen(III)-Ionen sind dabei in einer solchen Menge im Volumen $V_1$ enthalten oder hinzuzugeben, dass ein molares Verhältnis von Fluorid-Ionen zu Eisen (III)-Ionen von mindestens 3 : 1 in der wässrigen Dispersion vorliegt, wobei der Anteil an Eisen(III)-Ionen vorzugsweise mindestens 0,02 Gew.-%, vorzugsweise jedoch nicht mehr als 0,3 Gew.-%, besonders bevorzugt nicht mehr als 0,2 Gew.-% bezogen auf das Element Eisen beträgt. Vorzugsweise liegt der pH-Wert einer erfindungsgemäßen selbstabscheidenden wässrigen Dispersion im Bereich von 1,5 bis 4,0. Damit wird gewährleistet, dass sich ein Überzug bestehend aus dem Feststoffanteil bei Kontakt einer solchen erfindungsgemäßen wässrigen Dispersion mit Oberflächen aus Eisen, Stahl, Zink und/oder Aluminium ohne Anlegung einer äußeren Spannung auf den Metalloberflächen abscheidet. Der Vorteil erfindungsgemäß selbstabscheidender wässriger Dispersionen besteht darin, dass der dispergierte Anteil an anorganischen Verbindungen und/oder metallischen Verbindungen aufgrund des Herstellprozesses über erfindungsgemäße W/O Emulsionen als Präkursor weitestgehend eingekapselt im Bindemittel vorliegt. Damit wird erreicht, dass anorganische und/oder metallische Partikel, die als solche in sauren, Fluorid-haltigen wässrigen Medien üblicherweise rasch korrodieren, über den Umweg der Bereitstellung erfindungsgemäßer W/O Emulsionen stabil in selbstabscheidenden wässrigen Beschichtungsmitteln einformuliert werden können. Insbesondere Phosphate der Metalle Zn, Fe, Mn, Ni, Ca und Co und/oder aus schwerlöslichen Oxiden der Metalle und Halbmetalle Zr, Ti, Hf, Si und Sn, die aufgrund ihrer guten Korrosionschutzeigenschaften häufig in Lackformulierungen enthalten sind, können so erstmals in signifikanter Menge aus sauren, Fluorid-haltigen wässrigen Beschichtungsmitteln auf Metalloberflächen als Teil einer organischen Schutzschicht abgeschieden werden.

In einer alternativen bevorzugten Ausführungsform ist die wässrige Dispersion unmittelbar geeignet zur kathodischen Abscheidung auf Metalloberflächen, vorzugsweise Oberflächen von Eisen, Stahl, Zink und/oder Aluminium, und ist hierfür hergestellt aus einer erfindungsgemäßen W/O Emulsion enthaltend neben ethylenisch ungesättigten

Monomeren (M) eine Mischung ($M_n$) von di- oder polyfunktionalen organischen Verbindungen, die sowohl einen Epoxid-Harz als auch ein blockiertes Isocyanat-Harz umfasst, wobei der pH-Wert der wässrigen Dispersion auf einen Bereich von 1,5 bis 6 eingestellt ist.

Entsprechend der unterschiedlichen Anwendungen erfindungsgemäßer wässriger Dispersionen betrifft die vorliegende Erfindung zunächst die Verwendung einer bevorzugten erfindungsgemäßen wässrigen Dispersion enthaltend anionische Tenside, Fluorid- und Eisen(III)-Ionen zur außenstromlosen Abscheidung einer korrosionsschützenden Beschichtung auf Oberflächen von Eisen, Stahl, Zink und/oder Aluminium.

Des Weiteren betrifft die vorliegende Erfindung die Verwendung einer alternativ bevorzugten erfindungsgemäßen wässrigen Dispersion mit einem pH-Wert im Bereich von 1,5 bis 6 hergestellt aus einer W/O Emulsion enthaltend neben ethylenisch ungesättigten Monomeren (M) eine Mischung ($M_n$) von di- oder polyfunktionalen organischen Verbindungen, die sowohl einen Epoxid-Harz als auch ein blockiertes Isocyanat-Harz umfasst, zur kathodischen Abscheidung einer korrosionsschützenden Beschichtung auf Metalloberflächen, die vorzugsweise ausgewählt sind aus Oberflächen von Eisen, Stahl, Zink und/oder Aluminium.

Ausführungsbeispiele:

A. Herstellung erfindungsgemäßer W/O Emulsionen aus zwei Präkursor- W/O Emulsionen W/O(1) und W/O(2)

Zur Herstellung einer erfindungsgemäßen W/O Emulsion wurden zunächst die zwei Präkursor - W/O Emulsionen W/O(1) und W/O(2) formuliert, wobei für beide Präkursor- W/O Emulsionen zunächst die gleiche nicht wassermischbare Phase angesetzt wurde. Hierfür wurde eine Mischung von Monomeren (M) auf Basis von Acrylaten und Styrol vorgegeben und anschließend eine Mischung ($M_n$) von di- oder polyfunktionalen organischen Verbindungen, die zusammengesetzt ist aus einem Epoxid-Harz und einem Isocyanat-Harz, hinzugegeben, wobei solange gerührt wurde bis sich die Mischung ($M_n$) vollständig in der Monomerenmischung (M) gelöst hat. Die genaue Zusammensetzung der nicht wassermischbaren Phase kann der Tabelle 1 entnommen werden.

Tab. 1
Zusammensetzung der nicht wassermischbaren Phase der Präkursor- W/O Emulsionen W/O(1) und W/O(2)

| Bestandteil | Verbindung | Menqe / g |
|---|---|---|
| Monomere (M) | Butylacrylat | 7,46 |
| | Methylmethacrylat | 7,94 |
| | Styrol | 8,21 |
| Mischung ($M_n$) | Bisphenol A basiertes Epoxid-Harz mit EEW von 875-955 | 12,70 |
| | ε-Caprolactam blockiertes Isocyanat-Harz auf Basis von Isophorondiisocyanat | 1,62 |
| Amphiphil (1) gemäß Strukturformel (I) | $n/m \cong 0{,}9$; $n \cong 60$<br>$R = H$; $R_2 = -CH_3$; $R_3 = H$ | 0,75 |

Anschließend wurden zwei wässrige Lösungen gemäß Tabelle 2 enthaltend jeweils ausschließlich die zu einer Fällungsreaktion ($R_{IJ}$) komplementären Edukte ($E_I$) und ($E_J$) formuliert, die der in der Tabelle 1 aufgelisteten Menge an nicht wassermischbaren Phase hinzugegeben wurde. Eine erste Homogenisierung der beiden nicht mischbaren Phasen erfolgte mittels eines Homogenisators (Fa. Ystral, Modell X10/25; 10/F Schaft) nach dem Rotor-Stator-Prinzip bei 11.000 Umdrehungen/min für zwei Minuten. Direkt im Anschluss daran wird die Homogenisierung unter Ausbildung der jeweiligen Präkursor - W/O Emulsionen W/O(1) bzw. W/O(2) mittels Ultraschall (Fa. Branson, DIGITAL Sonifier®, Modell S-450D, 13mm Sonde) bei einer Amplitude von 90% und einer Ultraschalldauer von zwei Minuten durchgeführt.

Tab. 2
Zusammensetzung der wässrigen Phase der Präkursor - W/O Emulsionen W/O(1) und W/O(2)

| Fällungsreaktion ($R_{IJ}$) | Wässrige Phase der WO(1) | Wässrige Phase der WO(2) |
|---|---|---|

(fortgesetzt)

| Tab. 2<br>Zusammensetzung der wässrigen Phase der Präkursor - W/O Emulsionen W/O(1) und W/O(2) | | |
|---|---|---|
| Zinkphosphat (Gl. 1) | 1,10 g Zn(CH3COO)$_2$<br>in 10 g $H_2O$ | 0,52 g $H_3PO_4$<br>in 10g $H_2O$ |
| Bariumsulfat (Gl. 3) | 1,06 g $Ba(CH_3COO)_2$<br>in 10g $H_2O$ | 0,59 g $Na_2SO_4$<br>in 10 g $H_2O$ |

Die Herstellung einer erfindungsgemäßen W/O Emulsion enthaltend die anorganischen Partikel gemäß Fällungsreaktion ($R_{IJ}$) der Tabelle 2 erfolgte sodann durch Vereinigen der Präkursor - W/O Emulsionen W/O(1) und W/O (2) unter Ultraschall (Fa. Branson, DIGITAL Sonifier®, Modell S-450D, 13mm Sonde) bei einer Amplitude von 90% und einer Ultraschalldauer von zwei Minuten.

B. Herstellung einer erfindungsgemäßen wässrigen Dispersion aus einer W/O Emulsion gemäß Beispiel A

Zu 110 ml einer wässrigen Lösung enthaltend als Amphiphil (A2) 0,5 Gew.-% an Ammoniumlaurylsulfat wurden 30 ml einer gemäß Beispiel A hergestellten W/O Emulsion hinzugegeben und die Mischung sodann wie unter Beispiel A beschrieben im Homogenisator und mit Ultraschall behandelt. Die so erzeugte Emulsion wurde in einen 2-Hals-Rundkolben überführt und dort unter Stickstoffatmosphäre erhitzt. Sobald die Temperatur der Emulsion 60 °C erreicht hatte, wurden ihr 0,4 g Kalium-persulfat gelöst in 10 g Wasser zur Initiierung der Polymerisation der ethylenisch ungesättigten Bestandteile hinzugegeben. Die Emulsion wurde sodann bei 60 °C für 16 Stunden zur Vervollständigung der Polymerisation weiter gerührt. Nach diesen 16 Stunden liegt eine erfindungsgemäße wässrige Dispersion vor, deren Feststoffanteil sich aus dem Polymerisat enthaltend den jeweiligen partikulären anorganischen Feststoff ($Zn_3(PO_4)_2$ bzw. $BaSO_4$) zusammensetzt. Der Feststoffanteil in den wässrigen Dispersionen betrug jeweils ca. 17 Gew.-%, wobei der Anteil an $Zn_3(PO_4)_2$ bzw. $BaSO_4$ bezogen auf diesen Feststoffanteil bei ca. 2,5 Gew.-% lag.

C. Herstellung einer selbstabscheidenden wässrigen Zusammensetzung auf Basis der wässrigen Dispersion gemäß Beispiel B

Es wurden 30 g der erfindungsgemäßen wässrigen Dispersion aus dem Beispiel B enthaltend das Korrosionsschutzpigment $Zn_3(PO_4)_2$ mit 70 g einer wässrigen Lösung enthaltend 0,2 Gew.-% Eisen(III)fluorid, 0,15 Gew.-% Fluorwasserstoff und 0,08 Gew.-% Wasserstoffperoxid versetzt und mittels eines Homogenisators (Fa. Ystral, Modell X10/25; 10/F Schaft) nach dem Rotor-Stator-Prinzip bei 11.000 Umdrehungen/min für zwei Minuten homogenisiert. Die so hergestellte selbstabscheidende wässrige Dispersion hatte einen Feststofffanteil von ca. 5,1 Gew.-%. Der Anteil an freiem Fluorid (gemessen mit Lineguard® 101 Meter, Fa. Henkel) war in dieser wässrigen Dispersion innerhalb eines Zeitraums von 48 Stunden stabil, so dass keine Auflösung von $Zn_3(PO_4)_2$ durch Komplexbildung im sauren wässrigen Medium stattgefunden hat. Gereinigte und entfettete Stahlbleche (CRS) wurden für 2 Minuten in diese wässrige Dispersion eingetaucht und die sich auf dem Stahlblech abgeschiedene Beschichtung mit entionisiertem Wasser abgespült. Der Nassfilm wurde sodann für 30 Minuten bei 180 °C eingebrannt. Es wurde auf diese Weise eine homogene Lackbeschichtung mit einem Schichtgewicht von ca. 4 $g/m^2$ abgeschieden.

## Patentansprüche

**1.** W/O Emulsion umfassend

a) die wässrige Phase enthaltende Tröpfchen, wobei die Tröpfchen einen D90 Wert von nicht mehr als 10 $\mu$m aufweisen,
b) eine kontinuierliche nicht wassermischbare Phase und
c) mindestens ein Amphiphil (A1) mit einem HLB-Wert von kleiner als 10, **dadurch gekennzeichnet, dass** die wässrige Phase anorganische und/oder metallische Verbindungen in Partikelform enthält und die kontinuierliche Phase zumindest teilweise aus mindestens einem Monomer (M) und/oder einer Mischung ($M_n$) von di- oder polyfunktionalen organischen Verbindungen zusammengesetzt ist, wobei die jeweiligen Monomere (M) untereinander Polymerisationsreaktionen und die di- oder polyfunktionalen organischen Verbindungen der Mischung

($M_n$) miteinander Stufenwachstumsreaktionen eingehen können.

2. W/O Emulsion nach Anspruch 1, **dadurch gekennzeichnet, dass** das Amphiphil (A1) ausgewählt ist aus Niotensiden, vorzugsweise aus Polyoxoalkylenethern.

3. W/O Emulsion nach Anspruch 2, **dadurch gekennzeichnet, dass** die Polyoxoalkylenether folgende allgemeine Strukturformel (I) aufweisen:

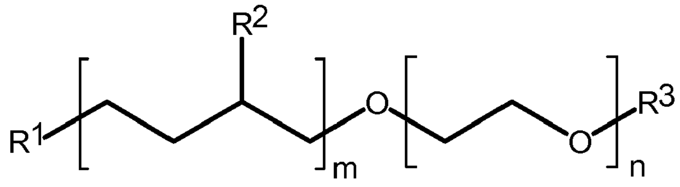

(I)

wobei die Reste $R^1$ und $R^2$ jeweils unabhängig voneinander ausgewählt sind aus H, F, $CF_3$, $CF_2H$, $CFH_2$ und $CH_3$ und der Rest $R^3$ ausgewählt ist aus H, $CH_3$, $C_2H_5$, $C_3H_7$ und $C_4H_9$; wobei m und n natürliche ganze Zahlen sind und die Summe m+n zumindest 10, vorzugsweise 100 ist; wobei das Verhältnis n/m vorzugsweise kleiner 1, besonders bevorzugt kleiner als 0,8 ist.

4. W/O Emulsion nach Anspruch 3, **dadurch gekennzeichnet, dass** der Polyalkyloxoalkylenether der allgemeinen Strukturformel (I) als Reste $R^1$ und $R^3$ jeweils ein Wasserstoff-Atom und als Rest $R^2$ eine Methyl-Gruppe aufweist.

5. W/O Emulsion nach einem oder mehreren der vorherigen Ansprüche, **dadurch gekennzeichnet, dass** die in der wässrigen Phase enthaltenen anorganischen Verbindungen in Partikelform ausgewählt sind aus schwerlöslichen Phosphaten der Metalle Zn, Fe, Mn, Ni, Ca und Co und/oder aus schwerlöslichen Oxiden der Metalle und Halbmetalle Zr, Ti, Hf, Si und Sn und/oder aus schwerlöslichen Sulfiden der Elemente Ni, Co und/oder Mo.

6. W/O Emulsion nach einem oder mehreren der vorherigen Ansprüche 1 bis 4, **dadurch gekennzeichnet, dass** die in der wässrigen Phase enthaltenen metallischen Verbindungen in Partikelform ausgewählt sind aus Metallen oder Legierungen der Elemente Sn, Fe, Ni, Co, Cu, Pt, Pd und/oder Ag mit einem Fremdatomanteil von weniger als 50 At.-%.

7. W/O Emulsion nach einem oder mehreren der vorherigen Ansprüche, **dadurch gekennzeichnet, dass** die kontinuierliche nicht wassermischbare Phase als Monomere (M) ethylenisch ungesättigte organische Verbindungen enthält.

8. W/O Emulsion nach einem oder mehreren der vorherigen Ansprüche, **dadurch gekennzeichnet, dass** die kontinuierliche nicht wassermischbare Phase als Mischung von di- oder polyfunktionalen organischen Verbindungen sowohl organische Verbindungen mit zumindest zwei Epoxid-Gruppen als auch organische Verbindungen mit zumindest zwei funktionalen Gruppen ausgewählt aus primären und/oder sekundären Amino-Gruppen, Hydroxyl-Gruppen, Carboxyl-Gruppen, blockierten Isocyanat-Gruppen und/oder Thiol-Gruppen enthält.

9. W/O Emulsion nach einem oder mehreren der vorherigen Ansprüche, **dadurch gekennzeichnet, dass** die kontinuierliche Phase zusätzlich ein oder mehrere inerte nicht wassermischbare Lösemittel enthält, die mit den Monomeren (M) und/oder den di- oder polyfunktionalen organischen Verbindungen der Mischung ($M_n$) weder Polymerisationsnoch Stufenwachstumsreaktionen eingehen können.

10. W/O Emulsion nach einem oder mehreren der vorherigen Ansprüche, **dadurch gekennzeichnet, dass** der Anteil der Monomere (M) oder der Monomerenmischung ($M_n$) in der kontinuierlichen nicht wassermischbaren Phase zumindest 10 Gew.-%, vorzugsweise zumindest 30 Gew.-% beträgt.

11. W/O Emulsion nach einem oder mehreren der vorherigen Ansprüche, **dadurch gekennzeichnet, dass** der Anteil an Amphiphilen in der W/O Emulsion zumindest 0,01 Gew.-%, vorzugsweise zumindest 1,0 Gew.-% beträgt, aber vorzugsweise nicht größer als 10 Gew.-% ist.

12. W/O Emulsion nach einem oder mehreren der vorherigen Ansprüche, **dadurch gekennzeichnet, dass** der Anteil

der anorganischen und/oder metallischen Verbindungen in Partikelform in der W/O Emulsion zumindest 0,1 Gew.-%, vorzugsweise zumindest 2 Gew.-%, aber nicht mehr als 50 Gew.-% beträgt.

**13.** W/O Emulsion nach einem oder mehreren der vorherigen Ansprüche erhältlich durch Vereinigung von Volumina von Präkursor - W/O Emulsionen unter Einwirkung einer Scherkraft, wobei die Volumina der Präkursor- W/O Emulsionen jeweils enthalten:

a) zumindest ein Edukt ($E_i$) oder zumindest ein Edukt ($E_j$) in der wässrigen Phase, wobei die Tröpfchen der wässrigen Phase einen D90 Wert von nicht mehr als 10 $\mu$m aufweisen;
b) eine kontinuierliche nicht wassermischbare Phase, die zumindest teilweise aus mindestens einem Monomer (M) und/oder einer Mischung ($M_n$) von di- oder polyfunktionalen organischen Verbindungen zusammengesetzt ist, wobei die jeweiligen Monomere (M) untereinander Polymerisationsreaktionen und die di- oder polyfunktionalen organischen Verbindungen der Mischung ($M_n$) miteinander Stufenwachstumsreaktionen eingehen können; und
c) mindestens ein Amphiphil (A1) mit einem HLB-Wert von kleiner als 10; wobei die Präkursor - W/O Emulsionen solche mit zumindest einem Edukt ($E_i$) als auch solche mit zumindest einem Edukt ($E_j$) umfassen und die Edukte ($E_i$) und ($E_j$) die Edukte zumindest einer Fällungsreaktion ($R_{ij}$) mit negativer Standard-Reaktionsenthalpie $\Delta H°_R$ bilden, wobei die Edukte ($E_i$) und ($E_j$) der Fällungsreaktion ($R_{ij}$) in einer solchen Menge in der jeweiligen wässrigen Phase der Präkursor - W/O Emulsionen enthalten sind, dass bei Vereinigung entsprechender Volumenfraktionen der wässrigen, aber amphiphilfreien Phasen der Präkursor - W/O Emulsionen bei Standardtemperatur spontan eine Ausfällung der anorganischen und/oder metallischen Verbindung gemäß der zumindest einen Fällungsreaktion ($R_{ij}$) erfolgt.

**14.** Wässrige Dispersion, bei der der dispergierte Feststoffanteil einen D90-Wert von nicht mehr als 10 $\mu$m aufweist, enthaltend ein organisches Bindemittel und anorganische und/oder metallische Partikel erhältlich in einem Verfahren umfassend die aufeinander folgenden Schritte i)-iii):

i) Herstellung einer O/W Emulsion durch Hinzugabe eines Volumens $V_1$ einer wässrigen Phase enthaltend mindestens ein Amphiphil (A2) mit einem HLB von größer als 8 zu einem Volumen $V_2$ einer W/O Emulsion nach einem oder mehreren der vorherigen Ansprüche 7 bis 13 enthaltend zumindest teilweise ethylenisch ungesättigte Monomere (M);
ii) Homogenisieren unter Einwirkung einer Scherkraft;
iii) Polymerisation der Monomere (M) enthaltend in der Ölphase der O/W Emulsion.

**15.** Wässrige Dispersion gemäß Anspruch 14 erhältlich dadurch, dass das Verhältnis der Volumina $V_1/V_2$ im Schritt i) zumindest 0,8 : 1, vorzugsweise zumindest 3 : 1, aber vorzugsweise nicht größer als 10 : 1 ist.

**16.** Wässrige Dispersion gemäß einem oder beiden der Ansprüche 14 und 15 erhältlich dadurch, dass das Amphiphil (A2) im Schritt i) ausgewählt ist aus anionischen Tensiden, vorzugsweise aus anionischen Tensiden mit einer Sulfat-, Sulfonat-, Sulfosuccinat-, Phosphat- oder Phosphonat-Gruppe.

**17.** Wässrige Dispersion gemäß einem oder beiden der Anspruch 14 bis 16 erhältlich dadurch, dass die wässrige Phase im Schritt i) anionische Tenside und zusätzlich Fluorid-Ionen enthält oder diese der Dispersion in einem zusätzlichen Schritt in Form wasserlöslicher Fluoride hinzugegeben werden.

**18.** Wässrige Dispersion gemäß Anspruch 17 erhältlich dadurch, dass in der wässrigen Phase im Schritt i) zusätzlich Eisen(III)-Ionen enthalten sind oder diese der Dispersion in einem zusätzlichen Schritt in Form wasserlöslicher Eisen (III)-Salze hinzugegeben werden.

**19.** Wässrige Dispersion gemäß einem oder mehreren der vorherigen Ansprüche 14 bis 18, **dadurch gekennzeichnet, dass** der pH-Wert der Dispersion im Bereich von 1,5-4,0 liegt.

**20.** Verwendung einer wässrigen Dispersion nach einem oder beiden der vorherigen Ansprüche 18 und 19 zur außenstromlosen Abscheidung einer korrosionsschützenden Beschichtung auf Oberflächen von Eisen, Stahl, Zink und/oder Aluminium.

**21.** Verwendung einer wässrigen Dispersion nach einem oder beiden der Ansprüche 14 und 15 mit einem pH-Wert im Bereich von 1,5 bis 6 hergestellt aus einer W/O Emulsion nach einem oder mehreren der vorherigen Ansprüche 1

bis 13 enthaltend neben zumindest einem ethylenisch ungesättigten Monomer (M) zusätzlich eine Mischung ($M_n$) von di- oder polyfunktionalen organischen Verbindungen, die sowohl einen Epoxid-Harz als auch ein blockiertes Isocyanat-Harz umfasst, zur kathodischen Abscheidung einer korrosionsschützenden Beschichtung auf Metalloberflächen.

Europäisches Patentamt / European Patent Office / Office européen des brevets

# EUROPÄISCHER RECHERCHENBERICHT

Nummer der Anmeldung
EP 11 15 8853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | US 4 935 456 A (HUANG TSAO-CHIN C [US] ET AL) 19. Juni 1990 (1990-06-19)<br>* Spalte 2, Zeilen 55-61 *<br>* Spalte 3, Zeile 40 - Spalte 4, Zeile 65 *<br>* Spalte 5, Zeile 31 - Spalte 6, Zeile 8 *<br>* Beispiele 1-12 *<br>* Ansprüche 1, 3, 4, 6 *<br>----- | 1-12, 14-17<br><br>13 | INV.<br>C09D5/08<br>C09D5/44<br>C09D7/12<br>B01J13/02<br>C08F292/00<br>C09C1/00<br>C09C3/10<br>C08F2/22<br>C08F2/32<br>C08F2/44 |
| X | US 2007/141247 A1 (HALL JON R [US] ET AL) 21. Juni 2007 (2007-06-21)<br>* Absätze [0002], [0017] - [0018], [0025] - [0034] *<br>* Absätze [0042] - [0043], [0047] - [0048] *<br>* Anspruch 1 *<br>----- | 14-18 | |
| X | WO 2008/135422 A1 (BASF SE [DE]; TUCHBREITER ARNO [DE]; WIESE HARM [DE]) 13. November 2008 (2008-11-13)<br>* Seite 3, Zeile 35 - Seite 6, Zeile 35 *<br>* Seite 7, Zeile 24 - Seite 12, Zeile 38 *<br>* Seite 20, Zeilen 10-17 *<br>* Ansprüche 1, 6, 10, 14 *<br>----- | 14-16 | RECHERCHIERTE SACHGEBIETE (IPC)<br>C09D<br>C09C<br>B01J<br>C08F |
| X | US 5 431 956 A (ROBB JOHN [GB] ET AL) 11. Juli 1995 (1995-07-11)<br>* Spalte 1, Zeilen 10-31 *<br>* Spalte 2, Zeile 39 - Spalte 3, Zeile 55 *<br>* Beispiele 1-7 *<br>* Ansprüche 1,3, 8-10, 12, 14, 19, 22 *<br>-----<br>-/-- | 14-18 | |

~~Der vorliegende Recherchenbericht wurde für alle Patentans~~prüche erstellt

2

| Recherchenort | Abschlußdatum der Recherche | Prüfer |
|---|---|---|
| Den Haag | 19. September 2011 | Mayer, Anne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 11 15 8853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2006 034239 A1 (CLARIANT INT LTD [CH]) 31. Januar 2008 (2008-01-31)<br>* Absätze [0015] - [0019], [0028] - [0036], [0039] - [0047] *<br>* Absätze [0054], [0055] *<br>* Ansprüche 1, 3, 7, 11 *<br>----- | 14-18 | |
| Y | WO 2005/070820 A1 (MERCK PATENT GMBH [DE]; KOCH MATTHIAS [DE]; KHRENOV VICTOR [DE]; KLAPP) 4. August 2005 (2005-08-04)<br>* Seite 6, letzter Absatz - Seite 11, letzter Absatz *<br>* Beispiel 2 *<br>----- | 13 | |
| | | | RECHERCHIERTE SACHGEBIETE (IPC) |

~~Der vorliegende Recherchenbericht wurde für alle Patentans~~prüche erstellt

2

| Recherchenort | Abschlußdatum der Recherche | Prüfer |
|---|---|---|
| Den Haag | 19. September 2011 | Mayer, Anne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

Europäisches Patentamt
European Patent Office
Office européen des brevets

Nummer der Anmeldung

EP 11 15 8853

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-13(vollständig); 14-19(teilweise)

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt
European Patent Office
Office européen des brevets

**MANGELNDE EINHEITLICHKEIT DER ERFINDUNG ERGÄNZUNGSBLATT B**

Nummer der Anmeldung
EP 11 15 8853

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-13(vollständig); 14-19(teilweise)

Wässrige Dispersion, bei der der dispergierte Feststoffanteil einen D90-Wert von nicht mehr als 10 Micrometer aufweist, enthaltend ein organisches Bindemittel und anorganische und/oder metallische Partikel erhältlich in einem Verfahren umfassend die aufeinander folgenden Schritte i)-iii):
i) Herstellung einer O/W Emulsion durch Hinzugabe eines Volumens V1 einer wässrigen Phase enthaltend mindestens ein Amphiphil (A2) mit einem HLB von grösser als 8 zu einem Volumen V2 einer W/O Emulsion enthaltend zumindest teilweise ethylenisch ungesättigte Monomere (M);
ii) Homogenisieren unter Einwirkung einer Scherkraft;
iii) Polymerisation der Monomere (M) enthaltend in der Ölphase der O/W Emulsion,
wobei die W/O Emulsion,
a) eine wässrige Phase enthaltende Tröpfchen, wobei die Tröpfchen einen D90 Wert von nicht mehr als 10 Micrometer aufweisen,
b) eine kontinuierliche nicht wassermischbare Phase und
c) mindestens ein Amphiphil (A1) mit einem HLB-Wert von kleiner als 10, umfasst,
dadurch gekennzeichnet, dass die wässrige Phase anorganische und/oder metallische Verbindungen in Partikelform enthält und die kontinuierliche Phase zumindest teilweise aus mindestens einem Monomer (M) und/oder einer Mischung (Mn) von di- oder polyfunktionalen organischen Verbindungen zusammengesetzt ist, wobei die jeweiligen Monomere (M) untereinander Polymerisationsreaktionen und die di- oder polyfunktionalen organischen Verbindungen der Mischung (Mn) miteinander Stufenwachstumsreaktionen eingehen können.

---

2. Ansprüche: 20(vollständig); 14-19(teilweise)

Verwendung einer wässrigen Dispersion enthaltend ein organisches Bindemittel, anorganische und/oder metallische Partikel, und zusätzlich Eisen(III)-Ionen zur aussenstromlosen Abscheidung einer korrosionsschützenden Beschichtung auf Oberflächen von Eisen, Stahl, Zink und/oder Aluminium.

---

3. Ansprüche: 21(vollständig); 14, 15(teilweise)

Verwendung einer wässrigen Dispersion enthaltend ein organisches Bindemittel und anorganische und/oder metallische Partikel mit einem pH-Wert im Bereich von 1,5 bis 6 , das organische Bindemittel bestehend aus einem ethylenisch ungesättigten Monomer (M) und einer Mischung

Europäisches Patentamt
European Patent Office
Office européen des brevets

## MANGELNDE EINHEITLICHKEIT DER ERFINDUNG ERGÄNZUNGSBLATT B

Nummer der Anmeldung

EP 11 15 8853

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

(Mn) von di- oder polyfunktionalen organischen Verbindungen, die sowohl einen Epoxid-Harz als auch ein blockiertes Isocyanat-Harz umfasst, zur kathodischen Abscheidung einer korrosionsschützenden Beschichtung auf Metalloberflächen

---

## ANHANG ZUM EUROPÄISCHEN RECHERCHENBERICHT ÜBER DIE EUROPÄISCHE PATENTANMELDUNG NR.

EP 11 15 8853

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2011

| Im Recherchenbericht angeführtes Patentdokument | Datum der Veröffentlichung | Mitglied(er) der Patentfamilie | Datum der Veröffentlichung |
|---|---|---|---|
| US 4935456 A | 19-06-1990 | KEINE | |
| US 2007141247 A1 | 21-06-2007 | CA 2607984 A1 | 13-09-2007 |
| | | EP 1963385 A2 | 03-09-2008 |
| | | JP 2009521583 A | 04-06-2009 |
| | | US 2007141247 A1 | 21-06-2007 |
| | | WO 2007102910 A2 | 13-09-2007 |
| WO 2008135422 A1 | 13-11-2008 | AT 505490 T | 15-04-2011 |
| | | AU 2008248731 A1 | 13-11-2008 |
| | | CN 101675081 A | 17-03-2010 |
| | | EP 2147020 A1 | 27-01-2010 |
| | | ES 2363054 T3 | 19-07-2011 |
| | | JP 2010526198 A | 29-07-2010 |
| | | KR 20100017596 A | 16-02-2010 |
| | | PT 2147020 E | 03-05-2011 |
| | | US 2010144922 A1 | 10-06-2010 |
| | | WO 2008135422 A1 | 13-11-2008 |
| US 5431956 A | 11-07-1995 | KEINE | |
| DE 102006034239 A1 | 31-01-2008 | CA 2658755 A1 | 31-01-2008 |
| | | CN 101506313 A | 12-08-2009 |
| | | DE 102006034239 A1 | 31-01-2008 |
| | | EP 2066752 A2 | 10-06-2009 |
| | | JP 2009544775 A | 17-12-2009 |
| | | KR 20090047486 A | 12-05-2009 |
| | | US 2009317647 A1 | 24-12-2009 |
| | | WO 2008011963 A2 | 31-01-2008 |
| WO 2005070820 A1 | 04-08-2005 | AT 376978 T | 15-11-2007 |
| | | CA 2554331 A1 | 04-08-2005 |
| | | JP 2007526934 A | 20-09-2007 |
| | | KR 20060127929 A | 13-12-2006 |
| | | US 2007154709 A1 | 05-07-2007 |
| | | WO 2005070820 A1 | 04-08-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010066785 A